# EUROPÄISCHE PATENTSCHRIFT

(11) **EP 4 011 475 B1**
(45) Veröffentlichungstag und Bekanntmachung des Hinweises auf die Patenterteilung: **23.07.2025**
(21) Anmeldenummer: 21208733.2
(22) Anmeldetag: 17.11.2021
(51) Int. Cl.: B01D 29/11

(54) **FILTERSYSTEM FÜR EIN WASSERFÜHRENDES HAUSHALTSGERÄT, WASSERFÜHRENDES HAUSHALTSGERÄT UND VERFAHREN ZUM ABLEITEN VON FLUID AUS EINEM BEHANDLUNGSRAUM**
WATER-CONDUCTING DOMESTIC APPLIANCE, FILTER SYSTEM FOR A WATER-CONDUCTING DOMESTIC APPLIANCE AND METHOD FOR DISCHARGING FLUID FROM A TREATMENT CHAMBER
SYSTÈME DE FILTRE POUR UN APPAREIL ÉLECTROMÉNAGER À CIRCULATION D'EAU, APPAREIL ÉLECTROMÉNAGER À CIRCULATION D'EAU ET PROCÉDÉ DE VIDANGE DE FLUIDE D'UNE CHAMBRE DE TRAITEMENT

(30) Priorität: 11.12.2020 DE 102020215691
(43) Veröffentlichungstag der Anmeldung: 15.06.2022
(73) Patentinhaber: BSH Hausgeräte GmbH, 81739 München (DE)
(72) Erfinder: Bischof, Andreas, 10407 Berlin (DE); Eglmeier, Hans, 10587 Berlin (DE)

(56) Entgegenhaltungen:
- EP-A1- 2 123 821
- EP-A1- 3 663 457
- EP-A2- 1 167 613
- WO-A1-02/48445
- CN-U- 203 248 457
- US-A- 2 022 016

## Beschreibung

Die vorliegende Erfindung betrifft ein Filtersystem für ein wasserführendes Haushaltsgerät, ein wasserführendes Haushaltsgerät, das das Filtersystem umfasst, und ein Verfahren zum Ableiten von Fluid aus einem Behandlungsraum eines wasserführenden Haushaltsgeräts.

In wasserführenden Haushaltsgeräten sind Filtersysteme in Wasserwegen (insbesondere in Umpump- und Abpumpsträngen) zum Ausfiltern von Partikeln (wie beispielsweise Mikroplastik) vorgesehen. Diese Filtersysteme verstopfen schleichend und daher vom Benutzer meist unbemerkt. Eine zurückgehende Pumpleistung beeinträchtigt den normalen Betrieb des wasserführenden Haushaltgeräts nur unmerklich und ist häufig akzeptabel. Tritt dann eine Fehlersituation auf, kann der durch das Filtersystem abführbare Volumenstrom nicht mehr ausreichend sein, um ausreichend Wasser aus dem wasserführenden Haushaltsgerät abzuleiten. Eine solche Fehlersituation kann beispielsweise bei einer Waschmaschine als wasserführendes Haushaltsgerät auftreten, bei der das Einlassventil defekt ist oder durch sonstige Umstände unkontrolliert Wasser in die Waschmaschine eingeleitet wird.

Für solche Fälle ist es bekannt einen schaltbaren Bypass (das heißt eine Umgehung des Filtersystems) vorzusehen. Dabei ist es ferner bekannt, dass der Bypass mittels einer druckgesteuerten passiven Schaltung oder einer aktiven Schaltung aktiviert und/oder deaktiviert werden kann. Mit dem Bypass lässt sich dann das Filtersystem im Notfall umgehen. Somit kann gewährleistet sein, dass auch bei einem teilweise oder vollständig zugesetzten Filtersystem ausreichend viel Wasser aus dem wasserführenden Haushaltsgerät abgepumpt werden kann.

Aus der WO 2020/089727 A1 ist eine Waschmaschine bekannt, die ein Filtersystem aufweist, das dazu ausgestaltet ist, Mikroplastik aus einem abgepumpten Fluid auszufiltern. Ferner umfasst die Waschmaschine ein Bypasssystem, welches das Fluid unter Umgehung des Filtersystems ableiten kann. Dabei wird das Bypasssystem druckgesteuert an und ausgeschaltet.

EP 2 123 821 A1 zeigt ein elektrisches Haushaltsgerät, das ein erstes Rohr und ein zweites Rohr aufweist, um aus einer Behandlungskammer Fluid zu einem Auslass abzuführen. In dem ersten hydraulischen Rohr ist eine erste Filtervorrichtung aufgenommen. In dem zweiten hydraulischen Rohr ist eine zweite Filtervorrichtung aufgenommen. Die zweite Filtervorrichtung weist eine größere Porengröße als die erste Filtervorrichtung auf.

WO 02/48445 A1 zeigt eine Waschmaschine mit einem Rezirkulationsweg, in dem ein erster Filter und ein zweiter Filter angeordnet sind. Der erste Filter ist ein Submicron-Filter und der zweite Filter ist ein Filter mit einer Porenweite zwischen 0,5 bis 4 Millimetern.

EP3663457 A1 beschreibt ein Filtersystem für ein wasserführendes Haushaltgerät mit einer Filtereinheit, wobei die Filtereinheit eine durchströmbare Filteroberfläche aufweist, die einen ersten Filterbereich zum Durchströmen des Fluids und mindestens einen zweiten Filterbereich zum Durchströmen des Fluids aufweist, wobei zwischen dem ersten Filterbereich und dem mindestens einem zweiten Filterbereich ein bewegliches Trennelement angeordnet ist, sodass in einem geschlossenen Zustand der Filtereinheit das Fluid im Wesentlichen nur einen der beiden Filterbereiche durchströmt.

Jedoch lässt sich so ein Bypasssystem auch missbräuchlich verwenden. So kann beispielsweise ein nicht notwendiges (das heißt vorsätzliches oder fahrlässiges) Umgehen des Filtersystems bewirkt werden. Jedoch könnte auch ein notwendiges (bei Auftreten eines Fehlerfalls) Umgehen des Filtersystems zukünftig aufgrund gesetzlicher Bestimmungen wenigstens regional verboten sein.

Daher macht es sich die vorliegende Erfindung zur Aufgabe, ein Filtersystem zu schaffen, das zum einen in der Lage ist, stets genügend Fluid aus einem wasserführenden Haushaltsgerät abzuführen und zum anderen trotzdem alle etwaigen zukünftig geltenden gesetzlichen Bestimmungen zu erfüllen.

Die vorliegende Erfindung löst das Problem mit einem Filtersystem mit den Merkmalen des Anspruchs 1, einem wasserführenden Haushaltsgerät mit den Merkmalen des Anspruchs 8 und mit einem Verfahren zum Ableiten von Fluid aus einem Behandlungsraum mit den Merkmalen des Anspruchs 9.

Gemäß einem Aspekt der vorliegenden Erfindung wird ein Filtersystem für ein wasserführendes Haushaltsgerät bereitgestellt, wobei das Filtersystem umfasst:
einen Hauptfilter, der in einer Hauptleitung angeordnet ist und dazu ausgestaltet ist, Partikel aus einem Fluid auszufiltern,
eine Bypassleitung, die dazu ausgestaltet ist, Fluid um den Hauptfilter herumzuführen, und
einen Nebenfilter, der dazu ausgestaltet ist, Partikel aus Fluid zu filtern, das durch die Bypassleitung um den Hauptfilter herumgeführt wird, wobei der Hauptfilter und der Nebenfilter dieselbe Porenweite aufweisen, und wobei die Bypassleitung dazu ausgestaltet ist, passiv aktiviert und/oder deaktiviert zu werden.

Dabei wird das obige Problem insbesondere durch das zusätzliche Vorsehen eines Nebenfilters zusätzlich zu dem Hauptfilter gelöst. Dabei kann der Nebenfilter in der Bypassleitung angeordnet sein. Dadurch kann verhindert werden, dass ungefiltertes Fluid einem Auslass wie beispielsweise einem Abwassersystem und damit letztendlich dem Wasserkreislauf zugeführt wird. Bei einem Fehlerfall, bei dem beispielsweise ein Einlassventil des wasserführenden Haushaltsgeräts defekt ist, sodass unkontrolliert Wasser in das Haushaltsgerät einströmt, muss mehr Wasser abgepumpt werden als während eines Normalbetriebs des Haushaltsgeräts. Insbesondere kann das in einem Haushaltsgerät vorgesehene Filtersystem dazu ausgestaltet sein im Fehlerfall über mehrere Stunden mehr Wasser abzupumpen als maximal in das Haushaltsgerät zulaufen kann. Im Gegensatz zu dem normalerweise zu filternden Fluid, ist das frische zulaufende Wasser nicht, beziehungsweise nur in sehr geringem Umfang mit Partikeln kontaminiert, die von dem Nebenfilter auszufiltern sind. Daher kann der Nebenfilter ein einfacher Dead-End-Filter mit relativ kleiner Filterfläche (im Vergleich zum Hauptfilter) sein. Mit anderen Worten kann der Nebenfilter eine geringere Filterfläche aufweisen als der Hauptfilter. Alternativ können der Hauptfilter und der Nebenfilter identisch sein und insbesondere dieselbe Filterflächengröße aufweisen.

Bei dem wasserführenden Haushaltsgerät kann es sich um eine Waschmaschine, ein Waschtrockner oder um eine Geschirrspülmaschine handeln. Ein solches wasserführendes Haushaltsgerät kann einen Behandlungsraum aufweisen, dem Wasser durch eine Zuleitung zugeführt werden kann. Dazu kann die Zuleitung mit einem Wasseranschluss verbunden oder verbindbar sein. Abhängig von der Steuerung des Haushaltsgeräts, kann Wasser während einem Normalbetrieb durch die Zuleitung dem Behandlungsraum in definierter Weise zugeleitet werden. Dazu kann in der Zuleitung zumindest ein Ventil zur Steuerung eines Volumenstroms angeordnet sein. Wie oben ausgeführt, kann es durch einen Defekt in der Zuleitung (beispielsweise bei einem defekten oder blockierten Ventil) in einem Fehlerfall auch zu unkontrolliertem Wasserzulauf in den Behandlungsraum kommen.

Das Fluid kann ein Gemisch aus Wasser, Wäschebehandlungsmittel und Partikel sein. Die Partikel können dabei durch das Fluid transportiert werden. Ferner kann das Fluid auch als Flotte vorliegen. Flotte ist eine wässrige Flüssigkeit, in der Textilien gewaschen, gebleicht, gefärbt oder imprägniert werden können. Die Flotte kann dabei Lösungsmittel (meist Wasser) sowie alle darin enthaltenen gelösten, emulgierten oder dispergierten Bestandteile wie Farbstoffe, Pigmente, Chemikalien und Hilfsmittel umfassen.

Die Hauptleitung kann mit dem Behandlungsraum kommunizieren, um Fluid aus dem Behandlungsraum ableiten zu können. Dazu kann die Hauptleitung den Behandlungsraum mit einem Auslass verbinden. Der Auslass kann ein Anschluss zu einem Abwassersystem oder ein sonstiger Auslass zum Abgeben des Fluids an die Umwelt sein. In der Hauptleitung kann eine Pumpe angeordnet sein, die dazu ausgestaltet ist, Fluid aus dem Behandlungsraum abzupumpen. Somit ist es nicht nötig das Filtersystem so auszugestalten und anzuordnen, dass das Fluid mittels Schwerkraft bewegt wird. Bei der Pumpe kann es sich beispielsweise um eine Laugenpumpe handeln. Die Hauptleitung ist vorzugsweise zumindest teilweise aus einem Kunststoffschlauch oder einem Gummischlauch gebildet. Somit ist die Hauptleitung flexibel, sodass sie problemlos in dem Haushaltsgerät verlegt werden kann.

Der in der Hauptleitung angeordnete Hauptfilter kann dazu ausgestaltet sein, Partikel mit einer Größe von 5 µm bis 200 µm, bevorzugt 10 µm bis 100 µm, stärker bevorzugt 15 µm bis 50 µm, auszufiltern. Dazu kann der Hauptfilter ein Gewebe mit einer definierten Porenweite umfassen. Ferner kann der Hauptfilter eine Kapazität (das heißt ein Durchlassvermögen bei Verwendung in Verbindung mit einer üblichen Pumpe eines wasserführenden Haushaltsgeräts) in einem Bereich von 11 Liter pro Minute bis 15 Liter pro Minute aufweisen. Der Hauptfilter kann integraler Bestandteil der Hauptleitung sein oder mit dieser fluiddicht verbunden sein. Ferner kann der Hauptfilter zugänglich sein (insbesondere, wenn dieser in einem wasserführenden Haushaltsgerät vorgesehen ist), um ihn problemlos auszutauschen und/oder zu reinigen.

Die auszufilternden Partikeln können Mikroplastik umfassen. Insbesondere können die Partikel Plastikfasern mit einer Länge von 10 µm bis hin zu einige einigen 1000 µm umfassen, wobei die häufigste Länge in der Verteilung bei etwa 100-200 µm liegt. liegen wird einer Länge von ungefähr 10 µm aufweisen. Dabei können die Plastikfasern einen Durchmesser von ungefähr 10 mµ aufweisen. Ferner können die Partikel Abrieb von Kunststoffgeschirr oder von Textilien, Haare oder sonstige Gegenstände, die mit in das Haushaltsgerät gelangen können, umfassen.

Die Bypassleitung kann eine Leitung sein, die zumindest teilweise aus Kunststoff oder Gummi gebildet ist und die das Fluid um den Hauptfilter herumführen kann. Mit anderen Worten kann die Bypassleitung so ausgestaltet sein, dass sie Fluid stromaufwärts des Hauptfilters aus der Hauptleitung entnimmt und stromabwärts des Hauptfilters wieder der Hauptleitung zuführt. Alternativ kann die Bypassleitung aus der Hauptleitung abgeführtes Fluid auch separat zu demselben Auslass wie die Hauptleitung oder zu einem anderen Auslass leiten. Vorzugsweise entnimmt die Bypassleitung das Fluid direkt stromaufwärts des Hauptfilters (beispielsweise mit einem Abstand von weniger als 5 cm von dem Hauptfilter). Somit kann ein hoher Druck am Einlauf der Bypassleitung bereitgestellt werden was ein Schalten eines dort vorgesehenen Ventils erleichtert.

Die Bypassleitung wird aktiv oder passiv aktiviert und/oder deaktiviert. Mit anderen Worten die Bypassleitung aufgrund einer aktiven Steuerung (beispielsweise mit einem Aktor wie einem Elektromagnet, Motor, Phasenwechselaktor usw.) oder passiv (beispielsweise über den Wasserdruck wie einem Staudruck stromaufwärts des Hauptfilters) geöffnet und/oder geschlossen werden. Zur Steuerung kann beispielsweise ein Ventil verwendet werden. Vorzugsweise wird ein 2/2-Wege-Ventil verwendet. Das Ventil kann als ein separates Bauteil sein oder in dem Filtersystem integriert sein. Vorzugsweise ist ein Ventilmechanismus als das Ventil vorgesehen. Der Ventilmechanismus kann integraler Bestandteil des Hauptfilters und/oder des Nebenfilters sein. Beispielsweise kann ein bistabiles Bypassventil, das durch eine Zusammenwirkung mehrerer Dichtsitze und Führungen arbeitet, vorgesehen sein. Das bistabile Bypassventil kann zwei definierte Positionen haben:
1. Eine verschlossene Position, bei der die Bypassleitung verschlossen ist und
2. Eine offene Position, bei der die Bypassleitung offen ist, sodass das Fluid hindurchströmen kann.

Mit anderen Worten kann das bistabile Bypassventil zwischen der ersten und der zweiten Position wechseln, ohne dass es in einer Zwischenposition verbleibt. Dies hat den Vorteil, dass die Bypassleitung entweder vollständig für das Fluid zur Verfügung steht (d.h. vollständig geöffnet ist) oder für das Fluid nicht zugänglich ist (d.h. vollständig geschlossen ist). Zwischenstellungen und damit Abflüsse unterhalb der maximalen Kapazität der Bypassleitung können somit vermieden werden. Folglich kann Fluid rasch aus dem Behandlungsraum abgeführt werden auch wenn der Druck vor dem Hauptfilter abnimmt. Ferner kann das Ventil lediglich als ein Einschaltventil vorgesehen sein, um die Bypassleitung zusätzlich zu der Hauptleitung einzuschalten. Mit anderen Worten kann ein gleichzeitiges Ausschalten der Hauptleitung vermieden werden. Somit kann die Kapazität des Gesamtsystems bestehend aus der Bypassleitung und der Hauptleitung deutlich erhöht werden. In dem Fall, bei dem der Hauptfilter verstopft ist, dient dieser automatisch durch die Verstopfung als ein Ausschaltventil, da dieser für das Fluid nicht mehr passierbar ist. Ferner kann das Ventil als das oben aufgeführte 2/2-Wege-Ventil ausgestaltet sein. Das Ventil kann dabei als ein hydraulischer Einschalter arbeiten. Mit anderen Worten können in einem aktiv gesteuertem Bypass beide hydraulischen Leitungen (Hauptleitung und Bypassleitung) miteinander verbunden sein und nach außen dicht sein. Im ausgestalteten Zustand dagegen können beide Leitungen (die Hauptleitung und Bypassleitung) voneinander getrennt sein und, insbesondere druckfest, gegenüber dem Rest des Systems verschlossen sein. Ferner kann das Ventil passiv oder aktiv betrieben werden. Bei einer aktiven Ansteuerung des Ventils kann das Filtersystem einen Sensor aufweisen, der einen Wasserdruck stromaufwärts des Hauptfilters und/oder einen Wasserstand in dem Behandlungsraum messen kann. Ferner kann bei einer aktiven Ansteuerung des Ventils die dazu nötige Schaltenergie direkt während des Schaltvorgangs aufgebracht werden oder es wird zuvor gespeicherte Energie (beispielsweise mit Hilfe eines Federmechanismus) ausgelöst. Dazu ist es denkbar, dass bei Überschreiten eines bestimmten Staudruckwertes stromaufwärts des Hauptfilters oder auch aktiv durch einen Aktor oder manuell die Energie zum Umschalten des Ventils aufgebracht werden kann.

Das Öffnen des Ventils kann beispielsweise mit einem bistabilen Federsystem, einem Überdruckschalter, aktorisch oder auch manuell bewirkt werden. Das Ventil kann dabei bevorzugt durch Verschieben und/oder Verdrehen einer in dem Hauptfilter aufgenommenen Filterkartusche auf durch übereinander gleitenden Blenden als Ventil fungierende Einheit gebildet sein. Statt die ganze Filterkartusche zu bewegen, kann auch ein spezielles Bauteil (beispielsweise eine Abdeckung) bewegt werden. Eine solche kinematische Umkehr der Bewegung kann eine einfachere Ausgestaltung des Ventils darstellen. Ferner ist es vorteilhaft, dass keine externe Energiequelle benötigt wird, um die Bypassleitung zu aktivieren.

Der Nebenfilter kann genauso wie der Hauptfilter dazu ausgestaltet sein, Partikel aus dem Fluid auszufiltern. Dabei kann der Nebenfilter eine Porenweite im Bereich von 5 µm bis 200 µm, vorzugsweise zwischen 10 µm und 100 µm, stärker bevorzugt zwischen 15 µm und 50 µm, aufweisen. Der Nebenfilter kann ein Gewebe mit einer definierten Porenweite umfassen. Dadurch ist sichergestellt, dass der Nebenfilter auch Mikroplastik aus dem Fluid ausfiltern kann. Der Nebenfilter kann zugänglich sein, so dass er problemlos gereinigt und/oder ausgetauscht werden kann.

Mit der vorliegenden Erfindung wird somit ein eine Bypassleitung aufweisendes Filtersystem für ein Haushaltsgerät bereitgestellt, so dass bei Auftreten eines Fehlerfalls ausreichen Fluid aus dem Haushaltgerät abgeführt werden kann und dass jederzeit eine Filterung des abgeführten Fluids sichergestellt werden kann. Ferner kann der Hauptfilter für den Normalbetrieb des Haushaltsgeräts ausgelegt sein und kann daher immer eingeschaltet sein. Dadurch wird der Nebenfilter während einem Normalbetrieb des Haushaltsgeräts nicht mit Partikeln beaufschlagt und steht somit im Fehlerfall ohne Einschränkungen zur Verfügung. Ferner ist es denkbar, dass die Bypassleitung bei einem ausgeschalteten Haushaltsgerät permanent offen ist, sodass im Falle einer Aktivierung der Pumpe (beispielsweise im Fehlerfall) die Bypassleitung direkt zur Abführung von Fluid aus dem Haushaltsgerät genutzt werden kann. Dagegen wird der Bypass verschlossen, wenn das Haushaltsgerät eingeschaltet ist, sodass in einem Normalbetrieb des Haushaltsgeräts das Fluid nur durch den Hauptfilter abgeleitet werden kann. Mit anderen Worten kann die Bypassleitung bei ausgeschaltetem Haushaltsgerät eine Default-Stellung einnehmen, bei der die Bypassleitung geöffnet ist. Vorzugsweise wird dies mit einem Magnetventil bewerkstelligt, das bei ausgeschaltetem Haushaltsgerät nicht mit Strom versorgt wird und somit die Bypassleitung für Fluid zugänglich ist (d.h. geöffnet ist). Wird das Haushaltsgerät eingeschaltet, kann das Magnetventil mit Strom versorgt werden und kann die Bypassleitung während einem Normalbetrieb verschließen. Somit kann eine besonders einfache und sichere Steuerung des Filtersystems bereitgestellt werden.

Das vorliegende Filtersystem bietet den Vorteil, dass bei Beginn des Filterns über den Nebenfilter das System mit voller Leistung betrieben werden kann. Der Benutzer kann über diesen Zustand informiert werden (beispielsweise über eine Schnittstelle) und erhält eine Frist (die Laufzeit des Nebenfilters), die Wartung des Hauptfilters bzw. dann auch des Nebenfilters durchzuführen. Das Verhalten entspricht etwa dem einer Reserveschaltung bei Kraftstofftanks z.B. in Kraftfahrzeugen. Eine solche Reserveschaltung eines Filtersystems lässt sich vor allem auch dann vorteilhaft einsetzen, wenn der Hauptfilter zugesetzt ist und der Benutzer keine neuen Hauptfilter parat hat, das Hausgerät aber trotzdem benutzen möchte.

Vorzugsweise sind der Hauptfilter und der Nebenfilter parallel oder in Serie zueinander geordnet.

Dabei kann parallel angeordnet (d.h. parallelgeschaltet) bedeuten, dass Fluid entweder durch den Hauptfilter oder durch den Nebenfilter strömen kann. Dagegen kann in Serie angeordnet (d.h. in Serie geschaltet oder in Reihe geschaltet) bedeuten, dass Fluid durch den Hauptfilter und durch den Nebenfilter strömen kann. Mit anderen Worten bedeutet in Serie geschalten, dass der Hauptfilter und der Nebenfilter nacheinander in einer hydraulischen Leitung angeordnet sind. Der Vorteil bei einer Parallelschaltung ist, dass der Nebenfilter im Normalbetrieb nicht im Volumenstrom liegt und daher keinen zusätzlichen hydraulischen Widerstand darstellt. Bei der parallelen Anordnung des Hauptfilters und des Nebenfilters bietet sich der Vorteil, dass beide Filter leichter in einem Haushaltsgerät eingebaut werden können da das Filtersystem besonders kompakt ausgestaltet sein kann. Dem gegenüber ergibt sich bei der seriellen Anordnung der Vorteil, dass eine einfachere Schaltung vorgesehen sein kann. Insbesondere kann sich der Hauptfilter mit der Bypassleitung und dem zugehörigen Ventil in dem Haushaltsgerät befinden, während der Nebenfilter sich in einer Abpumpleitung zwischen Hauptleitung und Auslass (d.h. außerhalb des Haushaltsgeräts) befindet und dort im Prinzip an einer beliebigen Position angeordnet sein kann. Beispielsweise kann der Nebenfilter auch an der Mündung der Hauptleitung unmittelbar vor der Abführung des Fluids in den Auslass (beispielsweise in einem Wandeinlass) vorgesehen sein. Ferner kann der Nebenfilter bei steckbaren oder demontierbaren Abpumpschläuchen an der Geräteschnittstelle des Haushaltsgeräts angeordnet sein. In diesem Fall kann der Nebenfilter auf einfache Weise nachträglich in oder an dem Ablaufschlauch montiert werden. Alternativ kann ein vorhandener Abpumpschlauch durch einen Abpumpschlauch mit integriertem Nebenfilter ersetzt werden. Ein Nebenfilter in Serienschaltung lässt sich vorzugsweise verwenden, da während einem Normalbetrieb das den Nebenfilter passierende Wasser bereits in dem Hauptfilter von den auszufilternden Partikeln befreit wurde, was bei der Parallelschaltung so nicht der Fall ist.

Die beiden Schaltungsvarianten können auch kombiniert werden. Mit anderen Worten kann ein Filtersystem vorgesehen sein, das einen Hauptfilter und zwei Nebenfilter hat, von denen ein erster Nebenfilter hydraulisch in Parallelschaltung und ein zweiter Nebenfilter in hydraulischer Serienschaltung zu dem Hauptfilter angeordnet ist. In einer bevorzugten Schaltungsvariante sind beide Nebenfilter (das heißt die Nebenfilter zueinander) in Serie geschaltet und arbeiten als ein zweistufiges Nebenfiltersystem. Dabei kann der erster Nebenfilter (Nebenfilter in Parallelschaltung zu dem Hauptfilter) eine größere Porenweite gegenüber dem zweiten Nebenfilter (Nebenfilter in Serienschaltung zu dem Hauptfilter) aufweisen.

Vorzugsweise ist der Nebenfilter ein mehrstufiger Filter, der so ausgestaltet ist, dass zumindest eine Stufe des Nebenfilters Fluid aus der Bypassleitung filtern kann und dass zumindest eine weitere Stufe des Nebenfilters Fluid aus der Hauptleitung filtern kann.

Mit anderen Worten wird ein kombiniertes System (d.h. ein Nebenfiltersystem) als der Nebenfilter, vorgeschlagen, bei dem zwei Filterelemente in einem Nebenfiltersystem integriert sind. Mit anderen Worten ist eine Stufe des Nebenfiltersystems parallel zu dem Hauptfilter geschaltet und die andere Stufe des Nebenfiltersystems ist in Serie zu dem Hauptfilter geschaltet. Dabei können die einzelnen Stufen des Nebenfiltersystems unterschiedliche Porenweiten aufweisen, wobei die parallelgeschaltete Stufe eine gröbere Porenweite gegenüber der in Serie zu dem Hauptfilter geschalteten Stufe aufweisen kann. Die Integration von zumindest zwei Filterstufen in einem Nebenfilter bietet den Vorteil, dass quasi zwei Nebenfilter in einem Gehäuse integriert sein können. Ferner kann der Zusammenlauf der Bypassleitung und der Hauptleitung stromabwärts des Hauptfilters vorteilhaft in einem Gehäuse erfolgen. Dadurch können die benötigten Bauteile weiter reduziert werden, was die Effizienz der Herstellung des Filtersystems verbessert. Ferner kann der Platzbedarf des Filtersystems reduziert werden, wodurch das Filtersystem besonders kompakt ist.

Vorzugsweise kann in der Hauptleitung ein zweiter Nebenfilter stromabwärts des Hauptfilters angeordnet sein. Mit anderen Worten kann ein Nebenfilter in Serie zu dem Hauptfilter geschaltet sein und stromabwärts des Hauptfilters in der Hauptleitung angeordnet sein. Mit anderen Worten kann somit eine Bypassleitung vorgesehen sein, in der sich kein Filtersystem (weder Hauptfilter noch Nebenfilter) befindet. Dadurch kann das Filtersystem besonders einfach ausgeschaltet sein. Beispielsweise kann der Nebenfilter als ein Dead-End-Filter ausgestaltet sein, da bei eingeschaltem Hauptfilter (d.h. im Normalbetrieb) keine zu filternden Partikel den Hauptfilter passieren und somit den Nebenfilter zusetzen können. Ist der Bypass aktiv, das heißt wird der Hauptfilter von dem Fluid durch die Bypassleitung umgangen (d.h. im Fehlerfall), so filtert der Nebenfilter Partikel aus dem Fluid aus, sodass keine Partikelfracht zu dem Auslass der Hauptleitung gelangt.

Vorzugsweise sind der Nebenfilter der Hauptfilter in einem gemeinsamen Gehäuse angeordnet.

Dabei kann der Hauptfilter als eine axial verschiebbare Filterkartusche ausgestaltet sein. Die Filterkartusche filtert über den Zylindermantel das Fluid radial nach außen. Der Zylindermantel kann durch eine in die Kartusche integrierte Ringblende, die als Abtrennung beziehungsweise Dichtung zu einem Führungsrohr oder einer Verteilkartusche und als eine Führung dient, in die Sektionen Hauptfilter und Nebenfilter unterteilt sein. Mit anderen Worten kann die Ringblende den Nebenfilter und den Hauptfilter voneinander trennen. Im Normalbetrieb ist die Verteilkartusche so positioniert, dass das Fluid vollständig dem Hauptfilter zugeführt wird und das zulaufende Fluid vollständig durch den Hauptfilter strömt und dadurch gefiltert wird. Zum Aktivieren der Bypassleitung kann die Verteilkartusche axial verschoben werden, bis wenigstens ein Teil der Öffnung der Verteilkartusche in der Sektion des Nebenfilters liegt. Dadurch kann nun die Bypassleitung aktiviert sein und das Fluid zusätzlich zu dem Hauptfilter oder alternativ zu dem Hauptfilter über den Nebenfilter abführen. Die verschiebbare Filterkartusche kann hierbei als das Ventil (Ventilmechanismus) zum Einschalten und/oder Ausschalten der Bypassleitung dienen. Bei dieser Ausführungsform kann das Einschalten der Bypassleitung in Richtung der generellen Fließrichtung des Wassers erfolgen (das heißt der Staudruck des zu filternden Fluids stromaufwärts des Hauptfilters unterstützt die Schaltbewegung). Diese Ausführungsform ist besonders für passive Umschaltung durch den Staudruck geeignet. Eine aktorische Umschaltung ist jedoch auch denkbar. Dadurch kann ein besonders einfach aufgebautes Filtersystem bereitgestellt werden, was nur einen geringen Platzbedarf in einem wasserführenden Haushaltgerät braucht. Ferner ist hierbei keine gesonderte Steuerung notwendig was das Filtersystem besonders einfach macht.

Vorzugsweise weist der Nebenfilter einen Nebenfilter-Rakelmechanismus auf, der dazu ausgestaltet ist, eine Filterfläche des Nebenfilters abzurakeln. Alternativ oder zusätzlich kann der Hauptfilter einen Hauptfilter-Rakelmechanismus aufweisen, der dazu ausgestaltet ist, eine Filterfläche des Hauptfilters abzurakeln.

Mit anderen Worten kann mit Hilfe des Rakelmechanismus eine Oberfläche des Hauptfilters und/oder des Nebenfilters permanent, turnusmäßig oder nach Bedarf mit einer Rakel mechanisch von ausgefilterten Partikeln befreit werden, sodass die Filterleistung über eine längere Zeit konstant bleibt beziehungsweise nur sehr langsam abnimmt. Der Rakelmechanismus kann dabei Partikel von der Oberfläche des Filters zusammenschieben und beispielsweise an einer bestimmten Stelle innerhalb des Filters sammeln. Von dort können die abgerakelten Partikel durch eine Austragsöffnung aus dem jeweiligen Filter ausgetragen werden. Somit kann die Betriebszeit, in der das Filtersystem ohne Reinigung beziehungsweise Austausch betrieben werden kann, vergrößert sein. Die Rakel kann beispielsweise eine stegartige Struktur sein, die über die Oberfläche des Filters bewegt werden kann. Dabei kann die Rakel mit der Oberfläche des Filters in Kontakt sein. Im Falle eines mehrstufigen Filters kann jede Stufe des Filters bzw. die Filteroberfläche jeder Stufe des Filters einen eigenen Rakelmechanismus aufweisen oder von einem gemeinsamen Rakelmechanismus abgerakelt werden.

Vorzugsweise weist der Nebenfilter einen Nebenfilter-Rakelmechanismus auf, der dazu ausgestaltet ist, eine Filterfläche des Nebenfilters abzurakeln. Zusätzlich weist der Hauptfilter einen Hauptfilter-Rakelmechanismus auf, der dazu ausgestaltet ist, eine Filterfläche des Hauptfilters abzurakeln. Vorzugsweise werden der Nebenfilter-Rakelmechanismus und der Hauptfilter-Rakelmechanismus von einer gemeinsamen Welle angetrieben.

Dabei können beide Rakelmechanismen so miteinander in Verbindung stehen, dass sie dieselbe mechanische Antriebskraft nutzen. Beispielsweise kann der Nebenfilter und der Hauptfilter in einem gemeinsamen Gehäuse angeordnet sein, und die Welle, die die Rakelmechanismen antreibt, kann sich durch das Gehäuse erstrecken. Folglich kann ein einfacher Aufbau der Filter mit einem Rakelmechanismus erreicht werden. Durch das Abrakeln des Hauptfilters und des Nebenfilters, kann ein längerer Betrieb der Filter sichergestellt sein, ohne dass diese frühzeitig verstopfen.

Vorzugsweise kann der Hauptfilter und/oder der Nebenfilter einen Filterbereich aufweisen, der durch eine Abdeckung während einem Normalbetriebs des Haushaltsgeräts abgedeckt ist und somit nicht an der Filterung des Fluids beteiligt ist. Mit anderen Worten kann ein Teil der Filterfläche durch die Abdeckung verdeckt sein, so dass während einem Normalbetrieb nicht die gesamte vorhandene Filterfläche an der Filterung des Fluids beteiligt ist. Die Abdeckung kann relativ zu der Filterfläche, die sie abdeckt, verschiebbar sein. Somit kann die Abdeckung so ausgestaltet sein, dass sie in einem Fehlerfall zusätzliche Filterfläche freigibt, sodass der jeweilige Filter eine erhöhte Filterkapazität aufweist. Mit anderen Worten wird die von der Abdeckung abgedeckte Filterfläche, während dem Normalbetrieb nicht durch Partikel zugesetzt und kann somit nach dem Verschieben der Abdeckung zusätzlich oder alternativ für eine Filterung des Fluids genutzt werden. So kann der Nebenfilter während eines Normalbetriebs durch die Abdeckung abgedeckt sein. Dabei kann die Abdeckung als der Ventilmechanismus fungieren. Somit kann eine besonders einfache Ausgestaltung des Hauptfilters und des Nebenfilters erreicht werden.

Gemäß einem weiteren Aspekt der vorliegenden Erfindung wird ein Haushaltsgerät bereitgestellt, das ein oben beschriebenes Filtersystem und einen Behandlungsraum, dem Fluid zugeführt werden kann, und eine Pumpe, die stromaufwärts des Hauptfilters der Hauptleitung angeordnet ist, umfasst, wobei die Pumpe dazu ausgestaltet ist, Fluid aus dem Behandlungsraum abzupumpen. Der Behandlungsraum kann dabei so ausgestaltet sein, dass er im Wesentlichen fluiddicht ist. Der Behandlungsraum kann mit dem Zulauf und der Hauptleitung kommunizieren. In dem Fall, bei dem das Haushaltsgerät eine Waschmaschine ist, kann der Behandlungsraum ein Laugenbehälter der Waschmaschine sein. Ferner kann die Pumpe (d.h. eine Laugenpumpe) in der Hauptleitung des Filtersystems angeordnet sein.

Gemäß einem weiteren Aspekt der vorliegenden Erfindung wird ein Verfahren zum Ableiten von Fluid aus einem Behandlungsraum bereitgestellt, wobei das Verfahren die folgenden Schritte aufweist: Ableiten von Fluid durch eine Bypassleitung unter Umgehung eines in einer Hauptleitung angeordneten Hauptfilters, und Filtern des durch die Bypassleitung abgeleiteten Fluids mittels eines Nebenfilters.

Vorzugsweise wird das Fluid bis zum Erreichen eines bestimmten Wasserstands in dem Behandlungsraum, der eine Sicherheitsschwelle darstellt, durch die Hauptleitung abgeleitet. Vorzugsweise wird Fluid zusätzlich und/oder alternativ durch die Bypassleitung abgeleitet, wenn der Wasserstand in dem Behandlungsraum die Sicherheitsschwelle erreicht oder übersteigt.

Wenn das Hausgerät einen Fehlerfall feststellt (wie beispielsweise durch ungewollten Anstieg des Wasserspiegels im Behandlungsraum), wird zunächst der Hauptfilter weiter betrieben, um die eventuell in dem Behandlungsraum befindlichen Partikel durch den Hauptfilter auszufiltern. Erst bei weiterem Anstieg des Wasserstands in dem Behandlungsraum (das heißt bei Erreichen und/oder Übersteigen der Sicherheitsschwelle) wird auch durch den Nebenfilter (d.h. die Bypassleitung aktiviert) gefiltert, wobei der Nebenfilter dann im Wesentlichen nur noch von Partikeln befreites Fluid filtern beziehungsweise durchlassen muss und nicht mehr so schnell verstopfen kann. Dadurch ist ein reibungsloses Ableiten des Fluids durch die Bypassleitung im Fehlerfall gewährleistet. Das Bypasssystem (bestehend aus Bypassleitung und Nebenfilter) kann dabei so ausgelegt sein, dass es den durch das beschriebene Verfahren aufgebauten Fluidpuffer (Wasserzufuhr ab Einschaltschwelle abzüglich Wasserabfuhr durch möglicherweise zugesetzten Hauptfilter bis zur Sicherheitsschwelle) wieder abbauen kann.

Ein solcher Fehlerfall kann auch auftreten, wenn das Hausgerät nicht eingeschaltet ist. Mit anderen Worten kann etwa ein Fremdkörper im Zulaufventil bewirken, dass nach einem Abschalten des Geräts ein steter Wasserzufluss in das Gerät hinein stattfindet. In solchen Fällen lassen sich dann die fehlerfolgenmildernden bzw. beseitigenden Komponenten (wie beispielsweise eine in der Hauptleitung angeordnete Pumpe) unter Umgehung der Steuerung direkt von einem Sensor aktivieren. Beispielsweise könnte ein Wassersensor oder ein Wasserstandsensor auch bei ausgeschalteter Steuerung (d.h. bei ausgeschaltetem Haushaltsgerät) direkt die Laugenpumpe einschalten. Ferner kann die Bypassleitung bei ausgeschaltetem Haushaltsgerät geöffnet sein (beispielsweise als Default-Einstellung). Bei einem Einschalten des Haushaltsgeräts kann die Bypassleitung geschlossen werden, so dass Fluid während einem Normalbetrieb lediglich durch die Hauptleitung abgeführt wird. Dieses System wird insbesondere für Filtersysteme mit aktiv steuerbarem Ventil vorgeschlagen. Damit kann auch im Fehlerfall bei ausgeschalteter Steuerung die Bypassleitung zur Verfügung stehen, ohne dass irgendwelche aktorischen Mechanismen benötigt werden. Dadurch ist die Sicherheit selbst bei ausgeschaltetem Haushaltsgerät erhöht und es kann gewährleistet werden, dass Fluid zuverlässig in jeder Situation aus dem Behandlungsraum abgeführt werden kann.

Die zuvor genannten Merkmale und Vorteile in Bezug auf die Vorrichtung gelten in analoger Weise auch für das zuvor beschriebene Verfahren und andersherum. Einzelne Merkmale und Vorteile der oben beschriebenen Ausführungsformen können miteinander kombiniert und/oder ausgetauscht werden.

Im Folgenden wird die vorliegende Erfindung anhand einiger Ausführungsformen und den beigefügten Zeichnungen im Detail beschrieben.

In den Figuren zeigt:
**Fig. 1** eine schematische Ansicht eines wasserführenden Haushaltsgeräts mit einem Filtersystem gemäß einer Ausführungsform der vorliegenden Erfindung,
**Fig. 2** ein schematisches Schaltbild eines Filtersystems gemäß einer Ausführungsform der vorliegenden Erfindung,
**Fig. 3** ein schematisches Schaltbild eines Filtersystems gemäß einer Ausführungsform der vorliegenden Erfindung,
**Fig. 4** ein schematisches Schaltbild eines Filtersystems gemäß einer Ausführungsform der vorliegenden Erfindung,
**Fig. 5** ein schematisches Schaltbild eines Filtersystems gemäß einer Ausführungsform der vorliegenden Erfindung,
**Fig. 6** ein schematisches Schaltbild eines Filtersystems gemäß einer Ausführungsform der vorliegenden Erfindung,
**Fig. 7** ein schematisches Schaltbild eines Filtersystems gemäß einer Ausführungsform der vorliegenden Erfindung,
**Fig. 8** einen schematischen Querschnitt durch ein Filtersystem gemäß einer Ausführungsform der vorliegenden Erfindung,
**Fig. 9** einen schematischen Querschnitt durch ein Filtersystem gemäß einer Ausführungsform der vorliegenden Erfindung,
**Fig. 10** zwei schematische Querschnitte durch ein Filtersystem gemäß einer Ausführungsform der vorliegenden Erfindung,
**Fig. 11** einen schematischen Querschnitt durch ein Filtersystem gemäß einer Ausführungsform der vorliegenden Erfindung,
**Fig. 12** einen schematischen Querschnitt durch ein Filtersystem gemäß einer Ausführungsform der vorliegenden Erfindung,
**Fig.13** einen schematischen Querschnitt durch ein Filtersystem gemäß einer Ausführungsform der vorliegenden Erfindung,
**Fig. 14** zwei schematische Querschnitte durch ein Filtersystem gemäß einer Ausführungsform der vorliegenden Erfindung und
**Fig. 15** einen schematischen Querschnitt durch ein Filtersystem gemäß einer Ausführungsform der vorliegenden Erfindung.

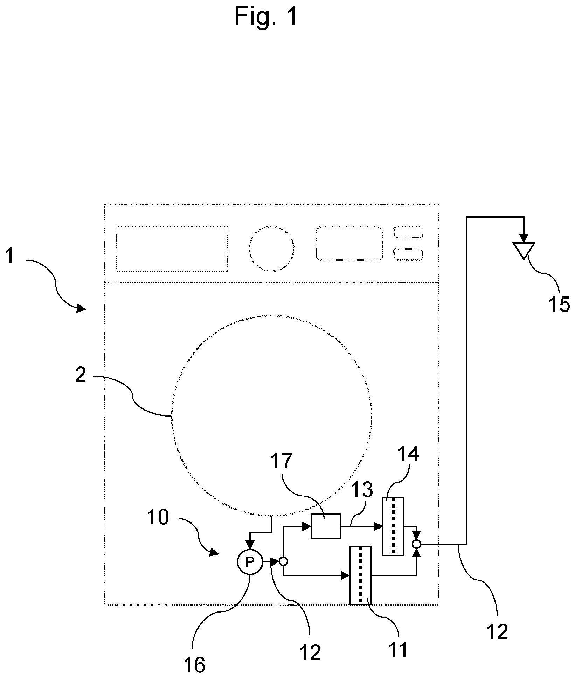

**Fig. 1** ist eine schematische Ansicht eines wasserführenden Haushaltsgeräts 1. Genauer gesagt ist das wasserführende Haushaltsgerät bei der vorliegenden Ausführungsform eine Waschmaschine 1. Die Waschmaschine 1 weist einen Behandlungsraum (einen Laugenbehälter) 2 auf. Die Waschmaschine 1 ist mit einem Zulauf an einem Wasseranschluss angeschlossen, sodass dem Behandlungsraum 2 über den Zulauf Wasser zugeführt werden kann. Mit einer Hauptleitung 12 ist der Behandlungsraum mit einem Auslauf verbunden. In der Hauptleitung weist die Waschmaschine 1 ein Filtersystem 10 auf, welches Wasser (Fluid), das mittels einer Laugenpumpe 16 aus dem Behandlungsraum 2 abgepumpt wird, filtern kann. Bei der vorliegenden Ausführungsform ist der Auslass 15 ein Abwasseranschluss. Ferner weist das Filtersystem 10 einen Hauptfilter 11 in der Hauptleitung 12 auf. Der Hauptfilter 11 ist dazu ausgestaltet, Partikel aus dem Wasser, welches aus dem Behandlungsraum 2 abgepumpt wird, auszufiltern. Genauer gesagt ist der Hauptfilter 11 dazu ausgestaltet, Mikroplastikpartikel aus dem abgepumpten Wasser auszufiltern. Dazu weist der Hauptfilter 11 ein Gewebe mit definierter Porenweite auf. Der Hauptfilter 11 hat eine Porenweite von ungefähr 50 µm, sodass er an seiner Filteroberfläche (siehe gestrichelte Linie in **Fig. 1**) Partikel zurückhalten kann.

Darüber hinaus weist das Filtersystem 10 eine Bypassleitung 13 auf, die so angeordnet ist, dass Wasser um den Hauptfilter 11 herumgeleitet werden kann. Mit anderen Worten kann mit der Bypassleitung 13 Wasser aus der Hauptleitung 12 stromaufwärts des Hauptfilters 11 entnommen werden und stromabwärts des Hauptfilters 11 wieder der Hauptleitung 12 zugeführt werden. Ferner ist in der Bypassleitung 13 ein Nebenfilter 14 angeordnet. Der Nebenfilter 14 ist bei der vorliegenden Ausführungsform genauso ausgestaltet wie der Hauptfilter 11. Ferner ist in der Bypassleitung 13 ein Ventil 17 angeordnet, das die Bypassleitung 13 öffnen und schließen kann.

Soll Wasser aus dem Behandlungsraum 2 abgepumpt werden, kann eine in der Waschmaschine 1 vorgesehene Steuereinheit die Pumpe 16 aktiveren. Ferner kann die Pumpe 16 aktiviert werden, wenn ein Wasserstand in dem Behandlungsraum 2 über einen voreingestellten Schwellenwert ansteigt oder diesen erreicht. Stellt die Steuereinheit dann fest, dass der Betrieb der Pumpe 16 nicht genügend Wasser aus dem Behandlungsraum 2 abführt (d.h. dass der Wasserspiegel weiter steigt, konstant bleibt oder nicht schnell genug abfällt), so kann die Steuereinheit das Ventil 17 öffnen, sodass Wasser zusätzlich über die Bypassleitung 13 abgeführt werden kann. Alternativ oder zusätzlich, kann das Ventil 17 auch automatisch auf Basis eines gemessenen Drucks stromaufwärts des Hauptfilters 11 geöffnet werden. Das bedeutet, dass der Bypass 13 automatisch geöffnet werden kann, wenn der Druck stromaufwärts des Hauptfilters 11 über einen bestimmten Schwellenwert ansteigt. Damit kann sichergestellt werden, dass, wenn der Hauptfilter 11 verstopft ist, die Bypassleitung 13 automatisch freigegeben wird, sodass Wasser zuverlässig aus dem Behandlungsraum 2 abgeführt werden kann. In der Bypassleitung 13 filtert dann der Nebenfilter 14 das abgeführte Wasser. Somit kann das Filtersystem 10 dafür sorgen, dass zum einen zuverlässig Wasser aus der Waschmaschine 1 abgeführt werden kann und zum anderen das abgeführte Wasser stets gefiltert wird, so dass vermieden ist, dass insbesondere Mikroplastikpartikel dem Auslass 15 zugeführt werden. Ferner ist bei der vorliegenden Ausführungsform der Nebenfilter 14 und der Hauptfilter 11 parallel zueinander geschaltet. Mit anderen Worten wird Wasser, dass durch den Hauptfilter 11 gefiltert wird nicht erneut durch den Nebenfilter 14 gefiltert und andersherum.

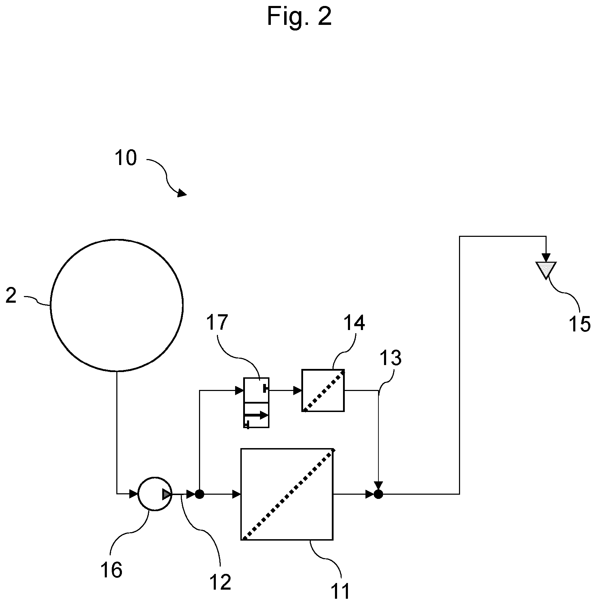

**Fig. 2** ist ein schematisches Schaltbild eines Filtersystems 10 gemäß einer weiteren Ausführungsform der vorliegenden Erfindung. Generell wird bei den folgenden Figuren auf die schematische Darstellung des Haushaltsgeräts 1 zur Erleichterung der Erklärung verzichtet. Das in **Fig. 2** dargestellte Filtersystem 10 unterscheidet sich von dem in **Fig. 1** dargestelltem Filtersystem 10 lediglich dadurch, dass der Nebenfilter 14 kleiner ist als der Hauptfilter 11 (d.h. eine kleinere Filterfläche aufweist). Ferner ist bei der vorliegenden Ausführungsform als das Ventil 17 ein 2/2-Wege-Ventil eingesetzt. Jedoch kann jede Art von Ventil oder Struktur, die die Bypassleitung 13 freigeben und/oder blockieren kann, als das Ventil 17 vorgesehen sein. Bei der vorliegenden Ausführungsform wird das Ventil so gesteuert, dass in einem Fehlerfall zunächst der Hauptfilter 11 weiter betrieben wird, um die eventuell in dem Behandlungsraum 2 befindlichen Partikel noch auszufiltern, bevor die Bypassleitung 13 aktiviert wird. Somit muss der Nebenfilter 14 hauptsächlich Wasser mit einer geringen Partikelfracht filtern, weswegen der Nebenfilter 14 kleiner ausgestaltet sein kann. Mit anderen Worten ist bei dem von dem Nebenfilter zu filternden Wasser mit einer geringeren Partikelfracht zu rechnen. Ferner ist das Ventil 17 bei der vorliegenden Ausführungsform stromaufwärts des Nebenfilters 14 angeordnet. Dadurch herrscht bei dem Ventil 17 ein höherer Druck als in dem Fall, bei dem das Ventil 17 stromabwärts des Nebenfilters 14 angeordnet ist. Somit kann das Ventil 17 leichter geschaltet werden.

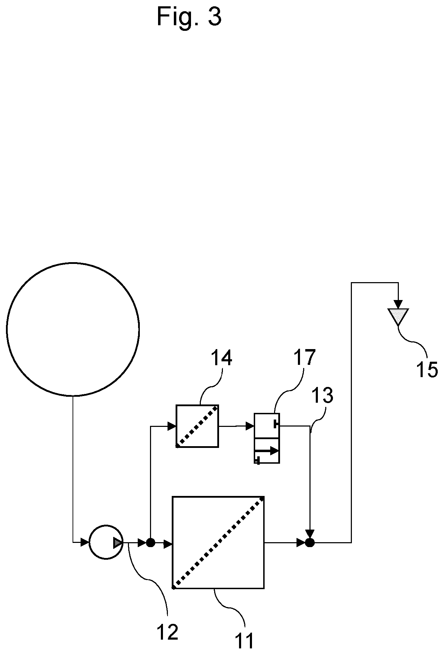

**Fig. 3** ist eine weitere Ausführungsform gemäß der vorliegenden Erfindung. Die in **Fig. 3** dargestellte Ausführungsform unterscheidet sich von der in **Fig. 2** dargestellten Ausführungsform lediglich dadurch, dass das Ventil 17 stromabwärts des Nebenfilters 14 angeordnet ist. Die übrigen Elemente und Anordnungen entsprechen der vorherigen Ausführungsform. Diese Anordnung bietet den Vorteil, dass das Ventil 17 lediglich mit bereits durch den Nebenfilter 14 gefilterten Wasser beaufschlagt wird. Somit ist die Lebenserwartung des Ventils 17 erhöht. In dem anderen Fall, bei dem das Ventil stromaufwärts des Nebenfilters 14 angeordnet ist, herrscht ein höherer Wasserdruck an dem Ventil 17, was Vorteile beim Schalten des Ventils 17 mit sich bringt.

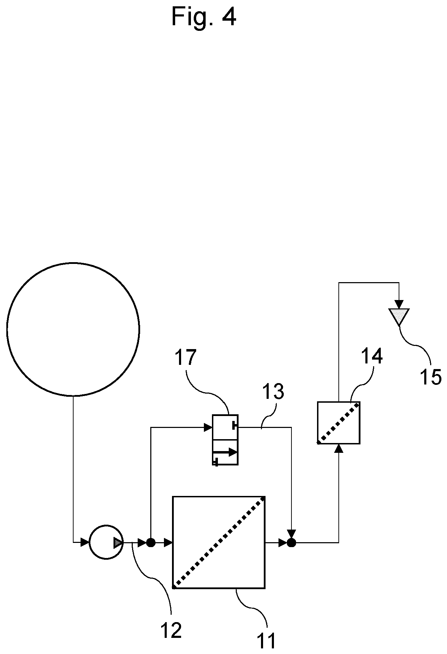

In **Fig. 4** ist eine weitere Ausführungsform gemäß der vorliegenden Erfindung dargestellt. Bei der vorliegenden Ausführungsform ist der Nebenfilter 14 in Reihe zu dem Hauptfilter 11 angeordnet. Genauer gesagt ist sowohl der Hauptfilter 11 als auch der Nebenfilter 14 in der Hauptleitung 12 angeordnet. Das heißt Wasser, das durch den Hauptfilter 11 gefiltert wird, wird anschließend auch durch den Nebenfilter 14 gefiltert. In der Bypassleitung 13 ist bei der vorliegenden Ausführungsform lediglich das Ventil 17 angeordnet, um die Bypassleitung 13 freizugeben und/oder zu verschließen. Die übrigen Elemente entsprechen den vorherigen Ausführungsformen. Bei der vorliegenden Ausführungsform ist der Nebenfilter 14 als sogenannter Dead-End Filter ausgestaltet. Dies ist möglich, da der Nebenfilter 14 im Normalbetrieb keine Partikel aus dem Wasser ausfiltern muss. Dies wird durch den Hauptfilter 11 bewirkt.

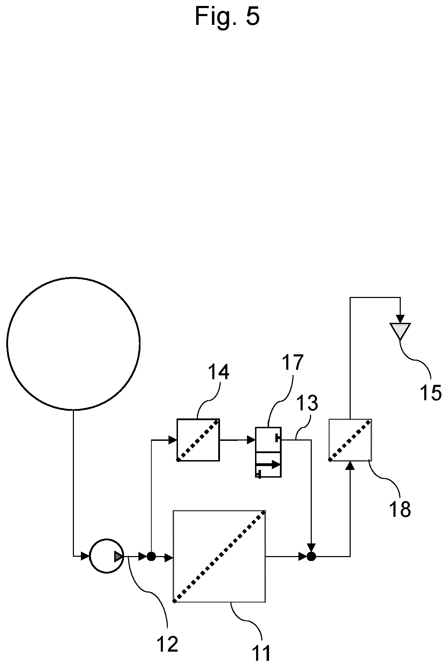

Die in **Fig. 5** dargestellte Ausführungsform gemäß der vorliegenden Erfindung basiert auf der in **Fig. 3** dargestellten Ausführungsform mit dem Unterschied, dass bei der vorliegenden Ausführungsform ein zweiter Nebenfilter 18 in der Hauptleitung 12 stromabwärts des Zusammenflusses der Bypassleitung 13 und der Hauptleitung 12 angeordnet ist. Mit anderen Worten ist der zweite Nebenfilter 18 stromabwärts des Hauptfilters 11 in der Hauptleitung 12 angeordnet. Somit ist bei der vorliegenden Ausführungsform der erste Nebenfilter 14 parallel zu dem Hauptfilter 11 angeordnet und der zweite Nebenfilter 18 ist in Reihe beziehungsweise in Serie zu dem Hauptfilter 11 angeordnet. Hierbei bietet sich der Vorteil, dass das abgeleitete Wasser noch zuverlässiger von Partikeln befreit werden kann. Ferner hat der Nebenfilter 14 eine größere Porenweite als der zweite Nebenfilter 18. Somit kann verhindert werden, dass sich der Nebenfilter 14 schnell zusetzt.

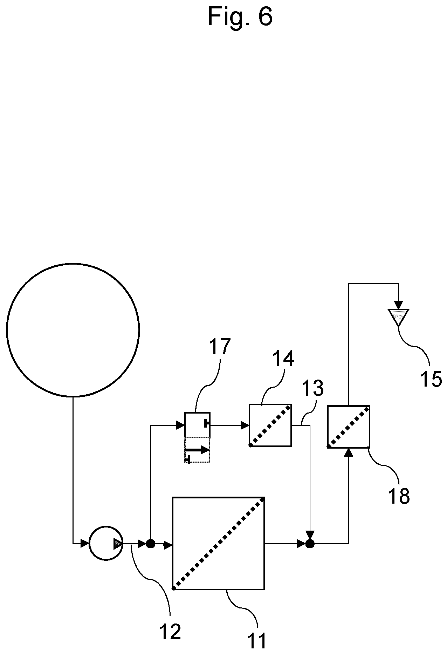

Die in **Fig. 6** dargestellte Ausführungsform entspricht im Wesentlichen der in **Fig. 5** dargestellten Ausführungsform, mit dem Unterschied, dass das Ventil 17 stromaufwärts des ersten Nebenfilters 14 angeordnet ist. Die übrigen Anordnungen und Komponenten entsprechen den zuvor erläuterten Ausführungsformen. Dies bietet die bereits oben dargelegten Vorteile.

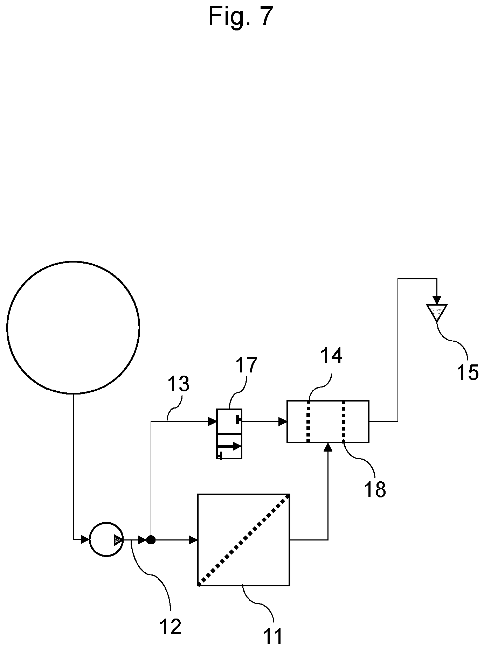

Die in **Fig. 7** dargestellte Ausführungsform gemäß der vorliegenden Erfindung weist ein Nebenfiltersystem als den Nebenfilter auf. In dem Nebenfiltersystem ist Nebenfilter 14 und der zweite Nebenfilter 18 in einem System integriert. Dabei können die jeweiligen Nebenfilter 14, 18 als Filterstufen bezeichnet werden. Dabei wird Wasser aus der Hauptleitung 12 lediglich durch zumindest eine Stufe gefiltert, wohingegen aus der Bypassleitung 13 durch zumindest eine weitere Filterstufe gefiltert wird. Mit anderen Worten ist bei der vorliegenden Ausführungsform zwei Nebenfilter in einer Baueinheit integriert. Im Bypassbetrieb (das heißt wenn die Bypassleitung 13 geöffnet ist) arbeitet der Nebenfilter bei der vorliegenden Ausführungsform als ein zweistufiger Filter.

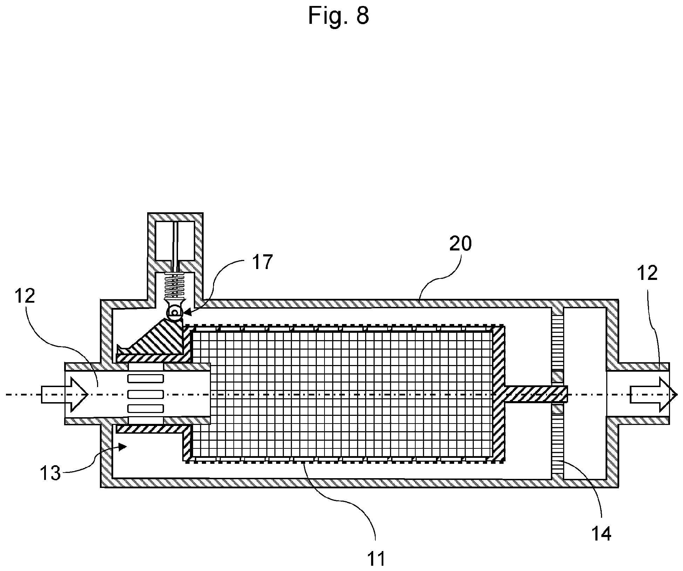

**Fig. 8** ist ein schematischer Querschnitt durch das Filtersystem 10 gemäß einer weiteren Ausführungsform der vorliegenden Erfindung. Bei der vorliegenden Ausführungsform ist der Hauptfilter 11 und der Nebenfilter 14 in einem gemeinsamen Gehäuse 20 integriert. Das zu filternde Wasser strömt entlang der Hauptleitung 12 in das Gehäuse 20 hinein (siehe Pfeil auf der linken Seite in **Fig. 8**). Im Normalbetrieb gelangt das zu filternde Wasser zu dem Hauptfilter 11, wo Partikel aus dem Wasser ausgefiltert werden. Anschließend gelangt das Wasser stromabwärts des Hauptfilters 11 zu dem nachgeordneten Nebenfilter 14 (d.h. in Serie angeordnet), wo es erneut gefiltert wird. Anschließend strömt das Wasser in der Hauptleitung 12 wieder aus dem Gehäuse 20 aus (siehe Pfeil auf der rechten Seite in **Fig. 8**). Mit anderen Worten ist bei der vorliegenden Ausführungsform der Hauptfilter 11 und der Nebenfilter 14 in Reihe zueinander geschaltet. Bei der vorliegenden Ausführungsform ist der Hauptfilter 11 als eine zylindrische Filterkartusche ausgebildet. Die Filterkartusche ist axial beweglich (d.h. verschiebbar) in dem Gehäuse 20 gelagert. Mit anderen Worten kann sich die Filterkartusche in **Fig. 8** nach rechts bewegen. Ist der Hauptfilter 11 zunehmend verstopft, erhöht sich der Wasserdruck aufgrund des neu zuströmenden Wassers und die Filterkartusche wird in axialer Richtung (in **Fig. 8** nach rechts) bewegt. Mit andere Worten wird die Filterkartusche durch den Wasserdruck stromaufwärts des Hauptfilters 11 axial verschoben. Dadurch wird ein Verschlussteil der Filterkartusche, die den Bypass 13 im Normalbetrieb verschließt, ebenfalls axial verschoben und gibt den Bypass 13 frei.

Somit kann das Wasser stromaufwärts des Hauptfilters 11 aus der Hauptleitung 12 in die Bypassleitung 13 abgeleitet werden und direkt dem Nebenfilter 14 zugeführt werden. Ferner weist das Gehäuse 20 bei der vorliegenden Ausführungsform einen Ventilmechanismus 17 auf, der die Filterkartusche in der verlagerten Position festlegt. Somit ist gewährleistet, dass der Bypass 11 in einer geöffneten Position verbleibt und stets genügend Wasser über die Bypassleitung 13 abgeführt werden kann. Mit anderen Worten bewirkt der Ventilmechanismus 17 der vorliegenden Ausführungsform, dass die Filterkartusche in zwei Positionen stabil gehalten werden kann. Die erste Position ist die Position, bei der die Bypassleitung 13 verschlossen ist (d.h. während einem Normalbetrieb). Die zweite Position ist die Position, bei der die Filterkartusche axial verlagert ist, und die Bypassleitung 13 geöffnet ist (d.h. in einem Fehlerfall). Zur Überführung der Filterkartusche von der ersten Position in die zweite Position kann der Wasserdruck ausreichen, der stromaufwärts von dem Hauptfilter 11 wirkt. Zum Verlagern der Filterkartusche von der zweiten Position in die erste Position kann entweder ein verringerter Wasserdruck stromaufwärts von dem Hauptfilter 11 ausreichen und/oder die Filterkartusche kann durch einen Aktor axial in die erste Position zurückbewegt werden, bei der die Bypassleitung 13 wieder verschlossen ist. Durch den Ventilmechanismus (Ventilsystem) 17 wird verhindert, dass die Filterkartusche Zwischenpositionen einnimmt, bei denen die Bypassleitung 13 nur teilweise geöffnet ist. Somit kann sichergestellt sein, dass genügend Wasser durch die Bypassleitung 13 abgeführt werden kann. Der Ventilmechanismus kann auch als ein bistabiles Ventil bezeichnet werden, da es zwei stabile Positionen einnehmen kann.

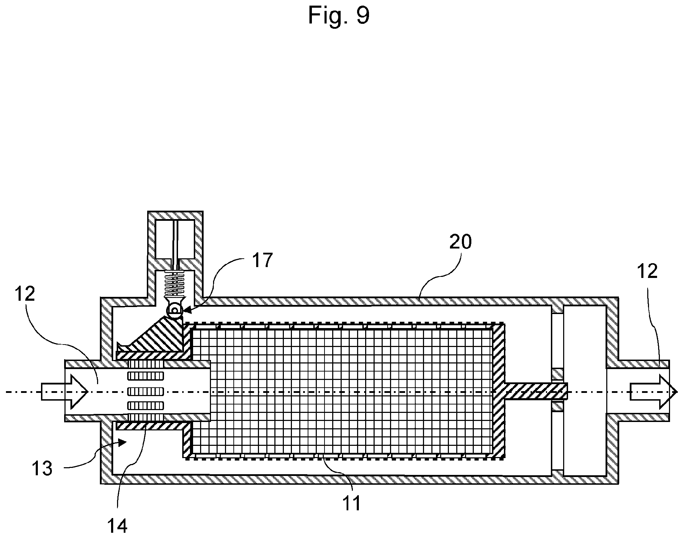

Die in **Fig. 9** dargestellte Ausführungsform entspricht im Wesentlichen der in **Fig.8** dargestellten Ausführungsform mit dem Unterschied, dass der Nebenfilter 14 parallel zu dem Hauptfilter 11 angeordnet ist. Mit anderen Worten ist der Nebenfilter 14 unmittelbar am Eingang zu der Bypassleitung 13 angeordnet, sodass Wasser entweder durch den Hauptfilter 11 oder durch den Nebenfilter 14 gefiltert wird. Genauer gesagt ist der Nebenfilter 14 direkt in der Ausleitung aus der Hauptleitung 12 angeordnet. Die übrigen Merkmale der vorliegenden Ausführungsform entspricht der in der **Fig. 8** dargestellten Ausführungsform.

In einer weitere nicht dargestellten Ausführungsform sind die in **Fig. 8** dargestellte Ausführungsform und die in **Fig. 9** dargestellte Ausführungsform miteinander kombiniert. Es sind dabei also zwei Nebenfilter 14, 18 vorgesehen. Diese Ausführungsform entspricht dann im Wesentlichen dem in **Fig. 7** dargestellten Schaltplan. Dadurch kann insgesamt eine verbesserte Filterleistung erreicht werden.

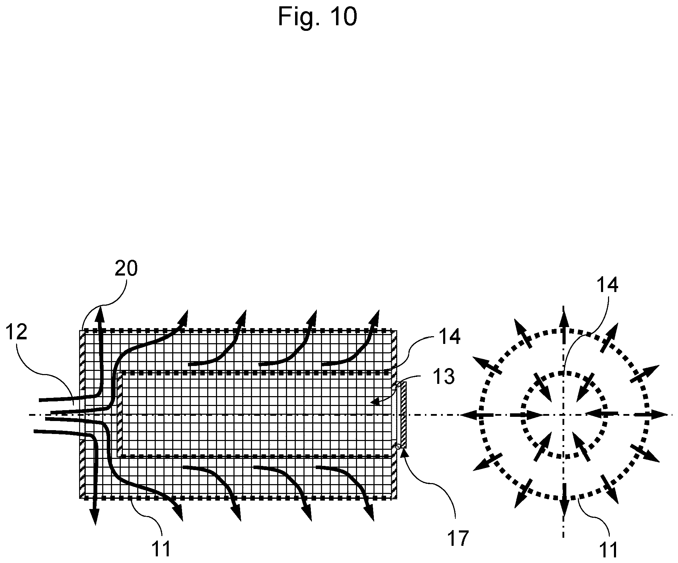

In **Fig. 10** sind zwei Schnitte eines Filtersystems 10 gemäß einer weiteren Ausführungsform der vorliegenden Erfindung dargestellt. Auf der linken Seite in **Fig. 10** ist ein Schnitt entlang der Längsachse des Filtersystems 10 dargestellt. Auf der rechten Seite in **Fig. 10** ist ein Querschnitt orthogonal zu der Längsachse dargestellt.

Bei der vorliegenden Ausführungsform sind der Hauptfilter 11 und der Nebenfilter 14 je als eine zylindrische Filterkartusche ausgestaltet. Der Hauptfilter 11 und der Nebenfilter 14 filtern das Wasser über ihre Mantelfläche. Der äußere Filter mit der größeren Fläche dient dabei als Hauptfilter 11, die Filterrichtung ist radial von innen nach außen. Der innere, etwas kleinere Filter dient als Nebenfilter 14, die Filterrichtung ist von außen nach innen.

Die Pfeile in dem linken Schnitt von **Fig. 10** zeigen die Fließrichtung und den Fließweg des Wassers während einem Normalbetrieb (das heißt bei einer Filterung durch den Hauptfilter 11) an. Bei der vorliegenden Ausführungsform ist der Nebenfilter 14 eine zylindrische Filterkartusche, die in den Hauptfilter 11, der ebenfalls als eine zylindrische Filterkartusche ausgebildet ist, eingefügt. Im Normalbetrieb strömt das zu filternde Wasser in das Gehäuse 20 ein und wird durch den Hauptfilter 11 radial nach außen gefiltert und wieder der Hauptleitung 12 (nicht dargestellt in **Fig. 10**) zugeführt. Die Bypassleitung 13 ist durch einen Verschluss, der bei der vorliegenden Ausführungsform das Ventil 17 ist, verschlossen. Auf der rechten Seite in **Fig. 10** ist der Strömungsweg des Wassers während dem Normalbetrieb durch die radial nach außen zeigenden Pfeile verdeutlicht. Dagegen ist der Strömungsweg des Wassers während dem Fehlerbetrieb durch die radial nach innen zeigenden Pfeile dargestellt. Mit anderen Worten wird hierbei das Wasser zusätzlich oder alternativ zu dem Hauptfilter 11 durch den Nebenfilter 14 in Richtung Mittelachse der Filterkartusche radial nach innen abgeführt und dabei gefiltert. Bei dem Filtersystem 10 der vorliegenden Ausführungsform handelt es sich um ein koaxiales Filtersystem 10. Die beiden ineinander geschachtelten koaxialen Zylinderfilter (Hauptfilter 11 und Nebenfilter 14) sind zu einer Baueinheit integriert, die bei Bedarf insgesamt vom Benutzer (als Kartusche) zu wechseln ist.

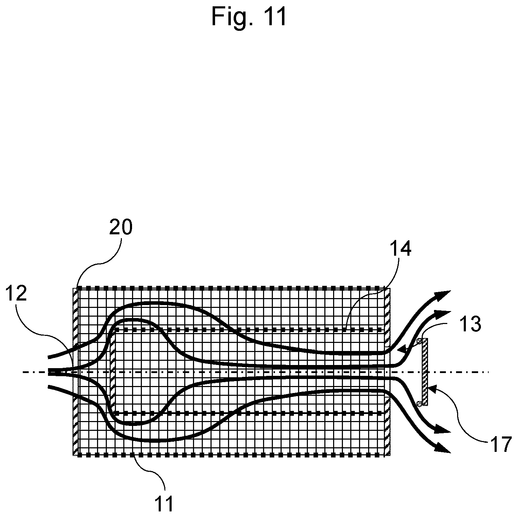

In **Fig.11** ist dann der Fehlerbetrieb dargestellt, bei dem die Bypassleitung 13 geöffnet ist. Dabei strömt das zu filternde Wasser ebenfalls in das Gehäuse 20 ein, wird dann aber radial nach Innen durch den Nebenfilter 14 gefiltert und dann wieder der Hauptleitung 12 zugeführt. Dazu wird stromabwärts des Nebenfilters 14 der Verschluss 17 (in **Fig. 11** nur schematisch dargestellt) geöffnet, sodass das Wasser durch den Nebenfilter 14 in die Bypassleitung 13 einströmt. Der Fehlerbetrieb ist in **Fig. 10** auf der rechten Seite durch die radial nach innen zeigenden Pfeile dargestellt. Das Öffnen des Ventils 17 kann mit den oben angeführten Mechanismen umgesetzt werden, etwa als bistabiles Federsystem, als Überdruckschalter, als aktorisch gesteuertes Ventil oder auch manuell zu betätigendes Ventil. Das Ventil selbst ist dabei ähnlich dem aus **Fig. 8** ausgeführt, also z.B. durch Verschieben und/oder Verdrehen der Kartusche auf durch übereinander gleitende Blenden als Ventilmechanismus fungierende Einheit. Statt die ganze Kartusche zu bewegen kann auch ein spezielles Bauteil bewegt werden.

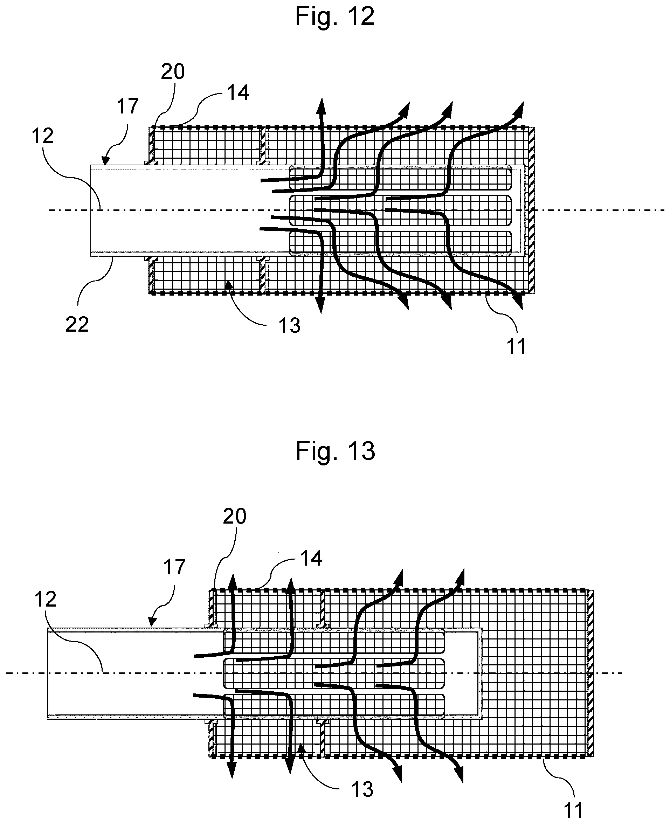

**Fig. 12** zeigt eine weitere Ausführungsform des Filtersystems 10 gemäß der vorliegenden Erfindung. Dabei sind der Hauptfilter 11 und der Nebenfilter 14 aneinander angrenzend angeordnet. Genauer gesagt bildet der Hauptfilter 11 und der Nebenfilter 14 zusammen eine zylindrische Filterkartusche. Der Nebenfilter 14 und der Hauptfilter 11 sind in der Filterkartusche durch eine Trennwand voneinander getrennt. In der Filterkartusche ist eine Verteilkartusche 22 angeordnet, die sich durch die Trennwand erstreckt und an ihrem in die Filterkartusche ragenden Ende einen Auslass aufweist. Die Verteilkartusche ist in der Filterkartusche verschiebbar. Im Normalbetrieb ist der Auslass der Verteilkartusche 22 so in dem Gehäuse 20 positioniert, dass das zu filternde Wasser lediglich dem Hauptfilter 11 zugeführt wird. Das zu filternde Wasser aus der Hauptleitung 12 strömt in die Filterkartusche 22 hinein und wird von dort durch den Auslass dem Hauptfilter 11 zugeführt. Stromabwärts des Hauptfilters wird das gefilterte Wasser wieder der Hauptleitung 12 zugeführt.

**Fig. 13** ist das in **Fig. 12** dargestellte Filtersystem 10 in einer Position, bei der die Bypassleitung 13 geöffnet ist. Dazu ist die Verteilkartusche 22 axial so verschoben, dass die Öffnung der Verteilkartusche 22 nur auch mit dem Nebenfilter 14 kommuniziert. Somit wird das Wasser, das in die Verteilkartusche 22 hineinströmt, zusätzlich zu dem Hauptfilter 11 auch noch dem Nebenfilter 14 zugeführt wird. Das zu filternde Wasser strömt also von der Hauptleitung 12 in die Verteilkartusche 22 hinein und wird von dort sowohl dem Hauptfilter 11 als auch dem Nebenfilter 14 zugeführt. Von dem Nebenfilter 14 gelangt das Fluid in die Bypassleitung 13, umgeht den Hauptfilter 11 und wird stromabwärts wieder der Hauptleitung 12 zugeführt. Die Verteilkartusche wird bei der vorliegenden Ausführungsform durch einen Aktor axial verschoben.

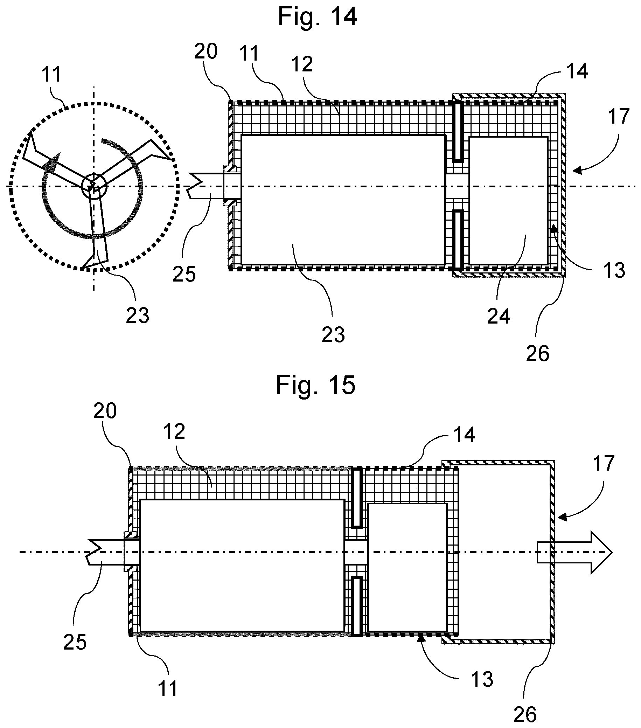

In **Fig. 14** ist eine weitere Ausführungsform der vorliegenden Erfindung. Auf der linken Seite der **Fig. 14** ist ein Schnitt orthogonal zu der Längsachse durch das Filtersystem 10 dargestellt. Auf der rechten Seite ist ein Schnitt durch das Filtersystem 10 entlang der Längsachse des Filtersystems dargestellt. Das Filtersystem 10 gemäß der vorliegenden Ausführungsform umfasst einen Hauptfilter-Rakelmechanismus 23, der dazu ausgestaltet ist, die Filterfläche des Hauptfilters 11 abzurakeln. Ferner umfasst das Filtersystem 10 einen Nebenfilter-Rakelmechanismus, der dazu ausgestaltet ist, den Nebenfilter 14 abzurakeln. Die beiden Rakelmechanismen sind über eine gemeinsame Welle 25 angetrieben. In der linken Darstellung in **Fig. 14** ist erkennbar, dass der Rakelmechanismus aus drei Rakeln besteht, die sich drehend in dem zylindrischen Hauptfilter 11 und dem zylindrischen Nebenfilter 14 angeordnet sind und die Filteroberfläche des Hauptfilters 11 und des Nebenfilters 14 abrakeln. Ferner ist bei der vorliegenden Ausführungsform der Nebenfilter 14 im Normalbetrieb durch eine Abdeckung 26 verschlossen, sodass durch den Nebenfilter 14 und die Bypassleitung 13 kein Wasser abgeführt werden kann.

In **Fig. 15** ist die Ausführungsform aus **Fig. 14** in einem Zustand dargestellt, bei dem die Bypassleitung 13 aktiviert ist. Dazu wird die Abdeckung 26 axial verschoben, sodass der Nebenfilter 14 für das Fluid freigegeben ist. Demnach sind der Hauptfilter 11 und der Nebenfilter 14 bei der vorliegenden Ausführungsform parallel zueinander angeordnet, da das Wasser entweder durch den Hauptfilter 11 oder durch den Nebenfilter 14 abgeführt werden kann.

Obwohl der Nebenfilter-Rakelmechanismus 24 und der Hauptfilter-Rakelmechanismus 22 lediglich bei der zuletzt genannten Ausführungsform dargestellt und beschrieben wurde, ist dieser auch bei jeder der zuvor beschriebenen Ausführungsformen einsetzbar. Somit kann zuverlässig gewährleistet werden, dass die Filterfläche des jeweiligen Filters turnusgemäß, regelmäßig oder nach Bedarf abgerakelt wird. Dadurch kann stets eine gleichbleibende Filterleistung des Hauptfilters 11 und/oder des Nebenfilters 14 gewährleistet sein.

Einzelne Merkmale der zuvor beschriebenen Ausführungsformen können miteinander kombiniert und miteinander ausgetauscht werden, und dadurch eine neue Ausführungsform der vorliegenden Erfindung bilden.

### Bezugszeichen

- 1: Haushaltsgerät
- 2: Behandlungsraum
- 10: Filtersystem
- 11: Hauptfilter
- 12: Hauptleitung
- 13: Bypassleitung
- 14: Nebenfilter
- 15: Auslass
- 16: Pumpe
- 17: Ventil
- 18: zweiter Nebenfilter
- 20: Gehäuse
- 22: Verteilkartusche
- 23: Hauptfilter-Rakelmechanismus
- 24: Nebenfilter-Rakelmechanismus
- 25: Welle
- 26: Abdeckung

## Patentansprüche

1. Filtersystem (10) für ein wasserführendes Haushaltsgerät (1), umfassend:
einen Hauptfilter (11), der in einer Hauptleitung (12) angeordnet ist und dazu ausgestaltet ist, Partikel aus einem Fluid auszufiltern,
eine Bypassleitung (13), die dazu ausgestaltet ist, Fluid um den Hauptfilter (11) herumzuführen, und
einen Nebenfilter (14), der dazu ausgestaltet ist, Partikel aus Fluid zu filtern, das durch die Bypassleitung (13) um den Hauptfilter (11) herumgeführt wird,
wobei der Hauptfilter (11) und der Nebenfilter (14) dieselbe Porenweite aufweisen, und
wobei die Bypassleitung (13) dazu ausgestaltet ist, passiv aktiviert und/oder deaktiviert zu werden.

2. Filtersystem (10) gemäß Anspruch 1, wobei der Hauptfilter (11) und der Nebenfilter (14) parallel oder in Serie zueinander angeordnet sind.

3. Filtersystem (10) gemäß Anspruch 1 oder 2, wobei der Nebenfilter (14) ein mehrstufiger Filter ist, der so ausgestaltet ist, dass zumindest eine Stufe des Nebenfilters (14) Fluid aus der Bypassleitung (13) filtern kann und dass zumindest eine weitere Stufe des Nebenfilters (14) Fluid aus der Hauptleitung (12) filtern kann.

4. Filtersystem (10) gemäß einem der Ansprüche 1 bis 3, wobei in der Hauptleitung (12) ein zweiter Nebenfilter (18) stromabwärts des Hauptfilters (11) angeordnet ist.

5. Filtersystem (10) gemäß einem der Ansprüche 1 bis 4, wobei der Nebenfilter (14) und der Hauptfilter (11) in einem gemeinsamen Gehäuse (20) angeordnet sind.

6. Filtersystem (10) gemäß einem der Ansprüche 1 bis 5,
wobei der Nebenfilter (14) einen Nebenfilter-Rakelmechanismus (24) aufweist, der dazu ausgestaltet ist eine Filterfläche des Nebenfilters (14) abzurakeln, und/oder
wobei der Hauptfilter (11) einen Hauptfilter-Rakelmechanismus (23) aufweist, der dazu ausgestaltet ist, eine Filterfläche des Hauptfilters (11) abzurakeln.

7. Filtersystem (10) gemäß einem der Ansprüche 1 bis 5,
wobei der Nebenfilter (14) einen Nebenfilter-Rakelmechanismus (24) aufweist, der dazu ausgestaltet ist eine Filterfläche des Nebenfilters (14) abzurakeln,
wobei der Hauptfilter (11) einen Hauptfilter-Rakelmechanismus (23) aufweist, der dazu ausgestaltet ist, eine Filterfläche des Hauptfilters (11) abzurakeln, und
wobei der der Nebenfilter-Rakelmechanismus (24) und der Hauptfilter-Rakelmechanismus (23) von einer gemeinsamen Welle (25) antreibbar ist.

8. Wasserführendes Haushaltsgerät (1) umfassend:
ein Filtersystem (10) gemäß einem der Ansprüche 1 bis 7,
einen Behandlungsraum (2), dem Fluid zugeführt werden kann, und
eine Pumpe (16), die stromaufwärts des Hauptfilters (11) in der Hauptleitung (12) angeordnet ist,
wobei die Pumpe (16) dazu ausgestaltet ist, Fluid aus dem Behandlungsraum (2) abzupumpen.

9. Verfahren zum Ableiten von Fluid aus einem Behandlungsraum (2), wobei das Verfahren die folgenden Schritte aufweist:
Ableiten von Fluid durch eine Bypassleitung (13) unter Umgehung eines in einer Hauptleitung (12) angeordneten Hauptfilters (11), und
Filtern des durch die Bypassleitung (13) abgeleiteten Fluids mittels eines Nebenfilters (14)
wobei der Hauptfilter (11) und der Nebenfilter (14) dieselbe Porenweite aufweisen, und
wobei die Bypassleitung (13) passiv aktiviert und/oder deaktiviert wird.

10. Verfahren gemäß Anspruch 9,
wobei das Fluid bis zum Erreichen eines bestimmten Wasserstands in dem Behandlungsraum (2), der eine Sicherheitsschwelle darstellt, durch die Hauptleitung (12) abgeleitet wird, und
wobei Fluid zusätzlich und/oder alternativ durch die Bypassleitung (13) abgeleitet wird, wenn der Wasserstand in dem Behandlungsraum (2) die Sicherheitsschwelle erreicht oder übersteigt.

## Claims

1. Filter system (10) for a water-conducting household appliance (1), comprising:
a main filter (11), which is arranged in a main line (12) and is designed to filter particles out from a fluid,
a bypass line (13), which is designed to guide fluid around the main filter (11), and
an auxiliary filter (14), which is designed to filter particles out from fluid which is passed around the main filter (11) through the bypass line (13),
wherein the main filter (11) and the auxiliary filter (14) have the same pore width, and
wherein the bypass line (13) is designed to be activated and/or deactivated passively.

2. Filter system (10) according to claim 1, wherein the main filter (11) and the auxiliary filter (14) are arranged parallel or in series with one another.

3. Filter system (10) according to claim 1 or 2, wherein the auxiliary filter (14) is a multistage filter which is designed so that at least one stage of the auxiliary filter (14) can filter fluid out from the bypass line (13) and that at least one further stage of the auxiliary filter (14) can filter fluid out from the main line (12).

4. Filter system (10) according to one of claims 1 to 3, wherein in the main line (12) a second auxiliary filter (18) is arranged downstream of the main filter (11).

5. Filter system (10) according to one of claims 1 to 4, wherein the auxiliary filter (14) and the main filter (11) are arranged in a shared housing (20).

6. Filter system (10) according to one of claims 1 to 5,
wherein the auxiliary filter (14) has an auxiliary filter scraper mechanism (24), which is designed to scrape a filter surface of the auxiliary filter (14), and/or
wherein the main filter (11) has a main filter scraper mechanism (23) which is designed to scrape a filter surface of the main filter (11).

7. Filter system (10) according to one of claims 1 to 5,
wherein the auxiliary filter (14) has an auxiliary filter scraper mechanism (24) which is designed to scrape a filter surface of the auxiliary filter (14).
wherein the main filter (11) has a main filter scraper mechanism (23) which is designed to scrape a filter surface of the main filter (11), and
wherein the auxiliary filter scraper mechanism (24) and the main filter scraper mechanism (23) can be driven by a shared shaft (25).

8. Water-conducting household appliance (1) comprising:
a filter system (10) according to one of claims 1 to 7,
a treatment chamber (2), to which fluid can be supplied, and
a pump (16) which is arranged upstream of the main filter (11) in the main line (12),
wherein the pump (16) is designed to pump fluid out from the treatment chamber (2).

9. Method for draining fluid out from a treatment chamber (2), wherein the method has the following steps:
draining fluid through a bypass line (13) by bypassing a main filter (11) arranged in a main line (12), and
filtering the fluid drained through the bypass line (13) by means of an auxiliary filter (14)
wherein the main filter (11) and the auxiliary filter (14) have the same pore width, and
wherein the bypass line (13) is activated and/or deactivated passively.

10. Method according to claim 9,
wherein the fluid is drained through the main line (12) until a specific water level in the treatment chamber (2), representing a safety threshold, is reached, and
wherein fluid is additionally and/or alternatively drained through the bypass line (13) if the water level in the treatment chamber (2) reaches or exceeds the safety threshold.

## Revendications

1. Système de filtrage (10) pour un appareil électroménager à circulation d'eau (1), comprenant :
un filtre principal (11), lequel est agencé dans une conduite principale (12) et réalisé pour extraire par filtration des particules d'un fluide,
une conduite de dérivation (13) réalisée pour faire que le fluide contourne le filtre principal (11) et
un filtre secondaire (14) réalisé pour filtrer les particules du fluide, lequel contourne le filtre principal (11) par la conduite de dérivation (13),
dans lequel le filtre principal (11) et le filtre secondaire (14) présentent la même largeur de pores, et
dans lequel la conduite de dérivation (13) est réalisée pour être passivement activée et/ou désactivée.

2. Système de filtrage (10) selon la revendication 1, dans lequel le filtre principal (11) et le filtre secondaire (14) sont agencés en parallèle ou en série l'un par rapport à l'autre.

3. Système de filtrage (10) selon la revendication 1 ou 2, dans lequel le filtre secondaire (14) est un filtre à plusieurs étages, lequel est réalisé de sorte qu'au moins un étage du filtre secondaire (14) peut filtrer le fluide venant de la conduite de dérivation (13) et qu'au moins un autre étage du filtre secondaire (14) peut filtrer le fluide venant de la conduite principale (12).

4. Système de filtrage (10) selon l'une des revendications 1 à 3, dans lequel un deuxième filtre secondaire (18) est agencé dans la conduite principale (12) en aval du filtre principal (11).

5. Système de filtrage (10) selon l'une des revendications 1 à 4, dans lequel le filtre secondaire (14) et le filtre principal (11) se trouvent dans un même coffret (20).

6. Système de filtrage (10) selon l'une des revendications 1 à 5,
dans lequel le filtre secondaire (14) comprend un mécanisme filtre secondaire-râcle (24), lequel est réalisé pour râcler une surface filtrante du filtre secondaire (14) et/ou
dans lequel le filtre principal (11) comprend un mécanisme filtre principal-râcle (23), lequel est réalisé pour râcler une surface filtrante du filtre principal (11).

7. Système de filtrage (10) selon l'une des revendications 1 à 5,
dans lequel le filtre secondaire (14) comprend un mécanisme filtre secondaire-râcle (24), lequel est réalisé pour râcler une surface filtrante du filtre secondaire (14), dans lequel le filtre principal (11) comprend un mécanisme filtre principal-râcle (23), lequel est réalisé pour râcler une surface filtrante du filtre principal (11), et
dans lequel le mécanisme filtre secondaire-râcle (24) et le mécanisme filtre principal-râcle (23) sont entraînés par un arbre (25) commun.

8. Appareil électroménager à circulation d'eau (1) comprenant :
un système de filtrage (10) selon l'une des revendications 1 à 7,
un espace de traitement (2), auquel du fluide peut être amené et
une pompe (16) située en amont du filtre principal (11) dans la conduite principale (12),
la pompe (16) étant réalisée pour évacuer par pompage le fluide de l'espace de traitement (2).

9. Procédé de détournement d'un fluide d'un espace de traitement (2), dans lequel le procédé comprend les étapes suivantes :
détournement du fluide par une conduite de dérivation (13) avec contournement d'un filtre principal (11) agencé dans une conduite principale (12) et
filtrage du fluide détourné par la conduite de dérivation (13) au moyen d'un filtre secondaire (14),
dans lequel le filtre principal (11) et le filtre secondaire (14) présentent la même largeur de pores, et
dans lequel la conduite de dérivation (13) peut être passivement activée et/ou désactivée.

10. Procédé selon la revendication 9,
dans lequel le fluide est détourné par la conduite principale (12) jusqu'à ce qu'un niveau d'eau déterminé dans l'espace de traitement (2), ait été atteint, lequel représente un seuil de sécurité, et
dans lequel le fluide est en plus et/ou alternativement, détourné par la conduite de dérivation (13) quand le niveau d'eau dans l'espace de traitement (2) atteint ou dépasse le seuil de sécurité.
